# FASCICULE DE BREVET EUROPEEN

(11) **EP 4 323 624 B1**
(45) Date de publication et mention de la délivrance du brevet: **26.11.2025**
(21) Numéro de dépôt: 22722301.3
(22) Date de dépôt: 12.04.2022
(51) Int. Cl.: F01D 5/28, F01D 9/04, F01D 9/06, F01D 25/24

(54) **TURBINE DE TURBOMACHINE A DISTRIBUTEUR EN CMC AVEC REPRISE D'EFFORT ET AJUSTEMENT DE POSITION**
TURBOMASCHINENTURBINE MIT CMC-DÜSE MIT LASTABSORPTION UND POSITIONSEINSTELLUNG
TURBOMACHINE TURBINE HAVING A CMC NOZZLE WITH LOAD ABSORPTION AND POSITIONAL ADJUSTMENT

(30) Priorité: 12.04.2021 FR 2103738
(43) Date de publication de la demande: 21.02.2024
(73) Titulaire: SAFRAN AIRCRAFT ENGINES, 75015 Paris (FR)
(72) Inventeur: GAILLARD, Aurélien, 77550 Moissy-Cramayel (FR); CAZIN, Clément, Emile, André, 77550 Moissy-Cramayel (FR); CONGRATEL, Sébastien, Serge, Francis, 77550 Moissy-Cramayel (FR); JARROSSAY, Clément, 77550 Moissy-Cramayel (FR); TABARIN, Pascal, Cédric, 77550 Moissy-Cramayel (FR)
(74) Mandataire: Cabinet Beau de Loménie
(86) Numéro de dépôt international: PCT/FR2022/050689
(87) Numéro de publication internationale: WO 2022/219282

(56) Documents cités:
- EP-A1- 3 121 379
- US-A1- 2016 312 658

## Description

### Domaine Technique

L'invention concerne un procédé de réalisation de turbine de turbomachine, et traite généralement turbomachines, notamment des turbomoteurs aéronautiques ou des turbines industrielles comprenant un distributeur de turbine en matériau composite à matrice céramique ou à matrice au moins partiellement en céramique, désigné ci-après par matériau CMC.

### Technique antérieure

Le domaine d'application de l'invention est notamment celui des moteurs aéronautiques à turbine à gaz. L'invention est toutefois applicable à d'autres turbomachines, par exemple des turbines industrielles.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique noté CMC par la suite.

Les matériaux CMC sont typiquement formés d'un renfort fibreux en fibres réfractaires, telles que des fibres de carbone ou de céramique, densifié par une matrice en céramique ou au moins partiellement en céramique.

Ces matériaux possèdent des propriétés thermo-structurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plateforme et talon intégrés. L'utilisation de matériaux CMC pour des distributeurs de turbine a aussi été proposée, notamment dans les documents WO 2010/146288, FR 2 979 662 et EP 2 443 318.

Un distributeur de turbine métallique traditionnel présente une forme de couronne composée de plusieurs secteurs assemblés, chaque secteur comprenant une plateforme intérieure, une plateforme extérieure et une pluralité de pales s'étendant entre les plateformes intérieure et extérieure et fixées à celles-ci. Les plateformes intérieures juxtaposées forment une virole intérieure et les plateformes extérieures juxtaposées forment une virole extérieure. Les viroles intérieure et extérieure délimitent la veine d'écoulement de gaz dans le distributeur.

Introduire un distributeur, par exemple un distributeur haute pression, en CMC permet d'augmenter la température maximale tolérée par rapport à un distributeur métallique, et ainsi de diminuer la quantité d'air de refroidissement utilisée. Cela permet ainsi d'augmenter les performances de la turbomachine.

Toutefois, le CMC, par ses propriétés différentes du métal est plus sensible à certaines contraintes mécaniques. En effet le CMC présente une plus grande rigidité et une plus faible dilatation. Il se comporte mieux en compression, mais ses contraintes admissibles en traction sont plus faibles que celles du métal.

De plus, l'intégration dans un environnement métallique d'une pièce en CMC est délicate en raison des dilatations thermiques différentielles entre le CMC et le métal. Cela est d'autant plus délicat dans une turbomachine, et plus particulièrement dans une partie à haute pression de la turbomachine, car l'environnement est chaud, ce qui exacerbe les différences de coefficients de dilatation thermique entre les matériaux, les efforts aérodynamiques subis par un distributeur haute pression étant en outre élevés dans cette zone de turbine.

Il est connu des distributeurs en CMC comme par exemple un distributeur de turbine comportant une virole externe de support solidaire d'un carter, une virole interne de support, et une pluralité de secteurs de distributeurs en CMC formant une couronne s'étendant entre la virole externe de support et la virole interne de support. Chaque secteur de distributeur est en appui sur les viroles interne et externe de support et comporte une plateforme intérieure, une plateforme extérieure, et au moins une pale s'étendant entre la plateforme extérieure et la plateforme intérieure et fixée à celles-ci.

Toutefois, il existe un besoin d'améliorer les solutions connues en ce qui concerne le maintien déterministe du secteur de distributeur en CMC avec la virole interne, notamment en termes de maintien axial du secteur de distributeur et en termes de reprise des efforts aérodynamiques.

Par ailleurs, un important différentiel de pressions est exercé sur le carter sous le distributeur dans les directions radiale et axiale. Ce carter sert à créer une étanchéité entre le rotor et le stator. Cet écart de pression est source d'un effort qui, s'il était exercé sur le CMC, serait élevé compte tenu des admissibles du matériau.

Il est connu également, notamment du document FR 3 061 928 et FR 2 973 435, un distributeur tel que décrit ci-dessus et comportant en outre un mât de renforcement s'étendant radialement à l'intérieur des aubes entre les deux plateformes permettant au distributeur d'être maintenu au carter par le mât.

Cependant, une telle solution reprend via le mât aussi bien les efforts relatifs au différentiel de pression sous le distributeur que les efforts aérodynamiques sur la couronne en CMC. En outre, pour les raisons évoquées ci-dessus relatives au comportement mécanique différent entre CMC et matériau métallique, il est difficile de positionner la partie CMC sur l'environnement métallique en la bridant.

Lors du fonctionnement de la turbine, un jeu radial important est généré entre le mât et la pale qu'il traverse. Plus particulièrement, la dilation du mât étant supérieure à la dilatation de la pale en CMC un jeu radial supérieur à 0,5 mm, voire supérieur à 1 mm, peut apparaître entre le mât et la pale qu'il traverse. Ce jeu radial génère une incertitude sur la position de la pale, le plaquage aérodynamique devenant aléatoire vers le haut ou le bas selon la résultante radiale de l'effort aérodynamique.

Dans un distributeur entièrement métallique, les distributeurs sont habituellement issus de fonderie et plusieurs pales composent un seul distributeur (souvent des doublets ou des triplets, c'est-à-dire deux ou trois pales par secteur d'anneau). Dans ce cas la section de passage est maîtrisée et répétable de par le procédé de fabrication.

Ce n'est plus le cas lorsque les aubes sont intégrées en matériau CMC dans un environnement métallique, pour plusieurs raisons. D'une part, de par le manque de maîtrise des tolérances sur les pièces en CMC, de par le fait que la pale en matériau CMC n'est pas contrainte en position pour éviter de l'endommager, et de par le contact entre la pale en matériau CMC et le mât métallique qui reprend les efforts.

Il est également connu des documents EP 3 121 379 et US 2016/312658 des turbines de turbomachine.

Il existe donc un besoin d'améliorer le maintien déterministe du distributeur en CMC de cette solution.

### Exposé de l'invention

L'invention est définie selon la revendication 1.

L'invention vise à pallier les inconvénients mentionnés ci-dessus et à passer outre les difficultés mentionnées ci-dessus en proposant une turbine de turbomachine comprenant un distributeur de turbine au moins en partie en CMC dont le montage est simplifié et adapté pour maintenir ses secteurs de distributeur de façon déterministe tout en permettant aux secteurs de se déformer indépendamment des pièces métalliques en interface, et en garantissant une étanchéité satisfaisante. L'invention vise en outre à permettre un ajustement du positionnement axial de la pale sur la virole supérieure.

Un objet de l'invention propose une turbine de turbomachine comprenant un carter, une virole externe de support en métal solidaire du carter et définissant une direction axiale et une direction radiale, une virole interne de support en métal, un distributeur annulaire de turbine comportant une pluralité de secteurs de distributeur en matériau composite à matrice céramique formant une couronne s'étendant entre la virole externe de support et la virole interne de support.

En outre, chaque secteur comportant une plateforme intérieure, une plateforme extérieure et au moins une pale s'étendant radialement entre les plateformes intérieure et extérieure et présentant un profil creux définissant un logement interne s'étendant radialement, et la turbine comprenant en outre, pour chaque secteur, au moins un mât solidaire de la virole métallique et traversant radialement le secteur via logement d'une pale.

Selon une caractéristique générale de l'invention, pour chaque secteur, la plateforme extérieure comprend une surface radialement externe en regard de la virole métallique externe et une butée axiale s'étendant en saillie radiale depuis la surface radialement externe de la plateforme extérieure, et la virole métallique externe comprend une surface radialement interne en regard de la plateforme extérieure et une butée axiale complémentaire s'étendant en saillie radiale depuis la surface radialement interne de la virole métallique externe, la butée axiale étant en appui selon la direction axiale contre la butée axiale complémentaire et située en amont de la butée axiale complémentaire par rapport au sens du flux d'air destiné à s'écouler au travers de la turbine, et la surface de la buté axiale en contact avec la butée axiale complémentaire présentant un angle d'usinage par rapport à un plan orthogonal à la direction axiale, l'angle d'usinage étant sélectionné pour ajuster l'orientation de ladite au moins une aube du secteur par rapport à la direction axiale.

L'invention propose ainsi une solution pour maîtriser la section de passage de l'écoulement de veine dans un distributeur comprenant un assemblage de pales creuses en CMC traversées par des mâts métalliques malgré un maintien en position non contraint.

L'appui plan, c'est-à-dire entre deux surfaces planes, entre le secteur de distributeur et la virole métallique externe solidaire du mât permet de supprimer le degré de liberté en rotation autour d'un axe radial de l'anneau de distributeur par rapport à sa structure de support formée notamment par la virole métallique externe 9 et le carter et de supprimer en outre le degré de liberté de translation selon la direction axiale D_{A}, c'est-à-dire selon l'axe moteur. Cela permet ainsi d'assurer le maintien en position du distributeur et ainsi de maîtriser la section de passage du distributeur en fonctionnement et de disposer d'une section de passage répétable pale à pale, puisque la surface de contact de la butée axiale est usinée pour assurer ce dernier point.

Selon un premier aspect de la turbine, les mâts et la virole métallique externe peuvent être réalisés en une seule pièce.

La configuration ainsi proposée permet de maîtriser la section de passage de la pale creuse en matériau CMC positionné sur un mât métallique malgré un maintien en position non contraint
Selon un deuxième aspect de la turbine, les mâts et la virole métallique externe peuvent être réalisés en une seule pièce
Cela permet de limiter au maximum les fuites qui seraient présentes dans le cas d'une virole sectorisée ou de mâts rapportés sur la virole externe.

Selon un troisième aspect de la turbine, la virole métallique externe peut comprendre, selon la direction axiale, une extrémité amont et une extrémité aval, la butée axiale complémentaire étant située sur l'extrémité aval
Selon un quatrième aspect de la turbine, le mât peut être creux.

Le mât permet ainsi d'amener de l'air dans la cavité radialement à l'intérieur de la virole interne afin de la pressuriser et ainsi éviter que l'air circulant dans la veine s'étendant entre les plateformes internes et externes des secteurs de distributeur soit réintroduit hors de cette veine et ne réduise ainsi la performance et n'augmente le risque de surchauffe des pièces.

L'invention a également pour objet, une turbomachine comprenant une turbine de turbomachine telle que définie ci-dessus.

L'invention a aussi pour objet, un aéronef comprenant au moins une turbomachine telle que définie ci-dessus.

L'invention a aussi pour objet un procédé de fabrication d'une turbine de turbomachine telle définie ci-dessus, le procédé comprenant une première étape de formation de l'anneau en matériau composite à matrice céramique, puis une deuxième étape de contrôle du profil de l'anneau ainsi formé, puis une troisième étape de détermination d'un angle d'usinage de la surface de la buté axiale en contact avec la butée axiale complémentaire pour ajuster l'orientation de ladite au moins une aube par rapport à la direction axiale, et une quatrième étape d'usinage de la surface de la buté axiale en contact avec la butée axiale complémentaire selon l'angle déterminé, et une cinquième étape d'assemblage de la turbine.

### Brève description des dessins

[Fig. 1] La figure 1 est une vue schématique en coupe d'un secteur d'une turbine selon un mode de réalisation de l'invention.
[Fig. 2] La figure 2 est une vue schématique de dessus en perspective d'un secteur d'anneau de la turbine de la figure 1.
[Fig. 3] La figure 3 représente une vue schématique de dessous en perspective d'une virole externe de support de la turbine de la figure 1.
[Fig. 4] La figure 4 représente schématiquement l'angle formé par la pale avant l'usinage de la surface d'appui de la butée axiale pour trois exemples différents.
[Fig. 5] La figure 5 représente pour les trois configurations de la figure 4, l'angle d'usinage des butées axiales des pales.
[Fig. 6] La figure 6 représente schématiquement les différences de section de passage entre deux pales pour les trois configurations de la figure 4.

### Description des modes de réalisation

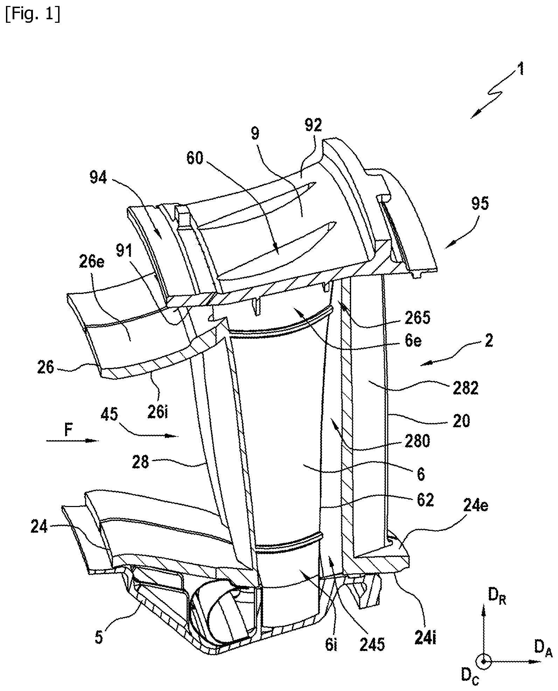

Sur la figure 1 est illustrée une vue schématique en coupe d'un secteur d'une turbine selon un mode de réalisation de l'invention.

Une turbine 1 haute pression d'une turbomachine, par exemple un turbomoteur aéronautique, telle que montrée partiellement sur la figure 1, comprend une pluralité de distributeurs fixes 2 qui alternent avec des roues mobiles dans le sens d'écoulement du flux gazeux F, indiqué par une flèche sur la figure 1, dans la turbine 1 et qui sont montés dans un carter de turbine.

Chaque roue mobile comprend une pluralité d'aubes ayant une virole intérieure, et au moins une pale s'étendant depuis la virole intérieure et liée à celle-ci. Du côté intérieur de la virole intérieure, l'aube se prolonge par un pied engagé dans un logement d'un disque. Du côté extérieur, le sommet des aubes est en regard d'un matériau abradable porté par un anneau pour assurer l'étanchéité aux sommets des aubes.

Dans tout le présent texte, les termes « intérieur » ou « interne » et « extérieur » ou « externe » sont utilisés en référence à la position ou l'orientation par rapport à l'axe de rotation de la turbine 1 qui définit la direction axiale D_{A} de la turbine 1.

Les aubes de la roue mobile peuvent être des aubes métalliques traditionnelles ou des aubes en matériau CMC obtenues par exemple comme décrit dans les documents WO 2010/061140, WO 2010/116066, WO 2011/080443.

Au moins l'un des distributeurs 2 de la turbine 1 est formé par réunion de plusieurs secteurs de distributeurs 20 annulaires en matériau CMC pour former un anneau complet. La flèche D_{A} indique la direction axiale du distributeur 2 tandis que la flèche D_{R} indique la direction radiale du distributeur 2 et le repère D_{C} indique la direction circonférentielle.

Chaque secteur 20 de distributeur du distributeur 2 comprend une plateforme intérieure 24, une plateforme extérieure 26 et une pale 28 s'étendant entre les plateformes intérieure et extérieure 24 et 26 et fixée à celles-ci. En variante, plusieurs pales pourraient s'étendre entre les plateformes intérieure et extérieure d'un même secteur de distributeur. Une fois assemblés avec le carter de la turbine 1, les secteurs 20 forment une unique couronne de distributeurs 2 présentant une virole intérieure formée par la juxtaposition des plateformes intérieures 24 des secteurs 20 et une virole extérieure formée par la juxtaposition des plateformes extérieures 26 des secteurs 20.

La virole intérieure et la virole extérieure forment entre elles une veine 45 d'écoulement de fluide à l'intérieur de laquelle le flux gazeux F s'écoule lors du fonctionnement de la turbine 1.

Dans tout le texte, les termes « amont » et « aval » sont utilisés en référence au sens d'écoulement du flux gazeux F dans la veine 45 indiqué par une flèche.

Les plateformes intérieures 24 présentent chacune une surface extérieure 24e destinée à être en contact avec le flux gazeux F, et donc disposée radialement en regard des plateformes extérieures 26 formant la virole extérieure. Les plateformes intérieures 24 présentent en outre une surface intérieure 24i disposée en regard de l'axe de rotation de la turbine 1.

Les plateformes extérieures 26 présentent chacune une surface extérieure 26e disposée en regard du carter radialement à l'extérieur. Les plateformes extérieures 26 présentent en outre une surface intérieure 26i destinée à être en contact avec le flux gazeux F, et donc disposée radialement en regard des plateformes intérieures 24 formant la virole intérieure et en regard de l'axe de rotation de la turbine 1.

Le distributeur 2 est maintenu entre une virole métallique interne 5 et une virole métallique externe 9 entre lesquelles s'étend la couronne formée par l'assemblage des secteurs d'anneau 20 du distributeur 2. La virole métallique externe 9 est solidaire du carter et présente une surface intérieure 91 et une surface extérieure 92 selon la direction radiale D_{R}.

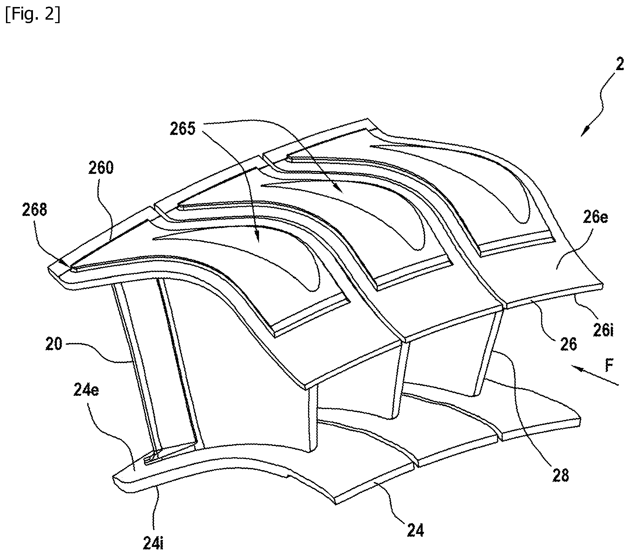

Comme cela est illustré sur la figure 1, ainsi que sur la figure 2 qui présente une vue schématique en perspective de dessus d'un secteur de distributeur 20, chaque pale 28 possède un profil creux présentant un logement intérieur 280 s'étendant sur toute la hauteur de la pale 28, c'est-à-dire entre la plateforme intérieure 24 et la plateforme extérieure 26 du secteur d'anneau 20. La plateforme intérieure 24 de chaque secteur de distributeur 20 comprend un orifice 245 dont la forme correspond à la section du logement intérieur 280 dans le plan dans lequel s'étend la plateforme intérieure 24.

De même, la plateforme extérieure 26 de chaque secteur de distributeur 20 comprend un orifice 265 dont la forme correspond à la section du logement intérieur 280 dans le plan dans lequel s'étend la plateforme intérieure 26. Les orifices 245 et 265 des plateformes intérieure 24 et extérieure 26 sont réalisés dans le prolongement du logement intérieur 280 de la pale 28.

Le logement intérieur 280 de la pale 28 et les orifices 245 et 265 des plateformes intérieure 24 et extérieure 26 peuvent être raccordés à un système de refroidissement délivrant un flux d'air de refroidissement depuis le carter jusque dans la pale 28 et les plateformes intérieure 24 et extérieure 26.

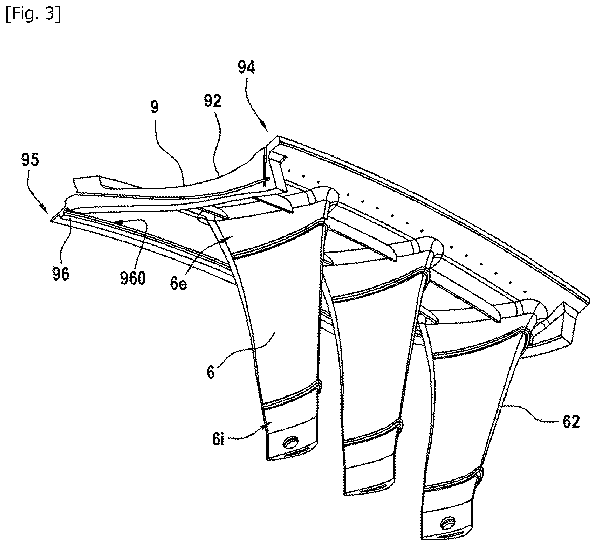

Comme cela est illustré sur la figure 1 et sur la figure 3 qui présente une vue schématique en perspective de dessous d'une virole externe de support 9, la virole externe de support 9 comprend, pour chaque secteur de distributeur 20, un mât 6 s'étendant dans la direction radiale D_{R} depuis la surface intérieure 91 de la virole métallique externe 9.

Comme cela est illustré, le mât 6 comprend une tige 62 s'étendant en saillie depuis la tête 61 dans la direction radiale D_{R} vers l'intérieur et configurée pour traverser la virole métallique externe 9, le logement intérieur 280 de la pale 28 et les orifices 245 et 265 des plateformes intérieure 24 et extérieure 26 étant alignés avec le logement intérieur 280 de la pale 28.

En d'autres termes, le mât 6 comprend une première extrémité 6i radialement interne et une seconde extrémité 6e radialement externe, un corps 62 s'étendant sensiblement selon la direction radiale D_{R} entre les première et seconde extrémités 6i et 6e du mât 6.

Le mât 6 est creux pour amener de l'air dans la cavité radialement à l'intérieur de la virole interne afin de la pressuriser et ainsi éviter que l'air circulant dans la veine s'étendant entre les plateformes internes et externes des secteurs de distributeur soit réintroduit hors de cette veine et ne réduise ainsi la performance et n'augmente le risque de surchauffe des pièces. Le mât 6 comprend ainsi un logement interne 60 s'étendant dans la direction radiale D_{R} entre les première et seconde extrémités 6i et 6e du mât 6.

La virole métallique externe 9 comprend une extrémité amont 94 et une extrémité aval 95 selon la direction axiale D_{A}. Sur son extrémité aval 95, la virole métallique externe 9 comprend un épaulement 96 s'étendant radialement vers l'intérieur depuis la surface intérieure 91 de la virole métallique externe 9 sur toute la circonférence de la virole métallique externe 9, et formant une surface d'appui 960 selon la direction axiale D_{A}, la surface d'appui 960 de la virole métallique externe étant orientée selon la direction axiale D_{A} face à l'écoulement du flux F, autrement dit en regard de l'amont.

La plateforme extérieure 26 comprend une butée axiale 260 s'étendant radialement vers l'extérieur depuis la surface extérieure 26e de la plateforme extérieure 26, la butée axiale 260 possédant une surface d'appui axial 262 orientée selon la direction axiale D_{A} selon le sens d'écoulement du flux F, c'est-à-dire en regard de l'aval. La surface d'appui axial 262 de la butée axiale 260 et ainsi en regard, et même au contact, de la surface d'appui 960 de l'épaulement 96 de la virole métallique externe 9.

Pour s'assurer que chaque secteur 20 du distributeur 2 annulaire présente la même section de passage entre ces pales 28, l'orientation des pales par rapport à la direction axiale D_{A} est ajustée en usinant, lors de l'assemblage de la turbine 1, la surface d'appui axial 262 de la butée axiale 260, avant finaliser l'assemblage du distributeur 2 avec la virole métallique externe 9.

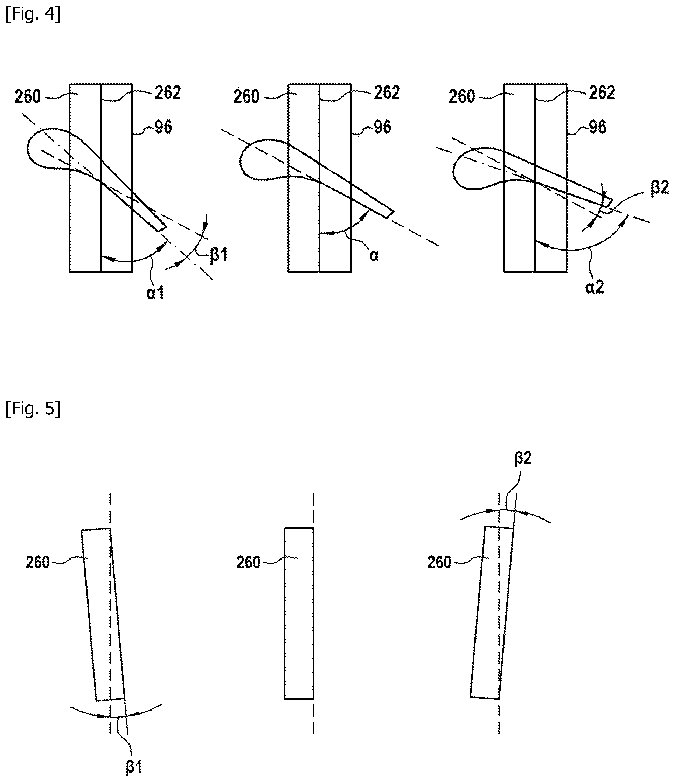

Comme cela est illustré sur la figure 4, lors de la formation des secteurs d'anneau 20 en matériau CMC, les secteurs 20 peuvent varier légèrement entre eux et présenter de légères différences des angles α formés, dans un plan orthogonal à la direction radiale D_{R}, entre la surface d'appui axiale 262 de la butée axiale 260 et la direction de la pale 28, notamment la direction d'un bord de fuite 282 de la pale 28. Sur la figure 4, on observe ainsi trois angles différents α₁, α et α₂ avec notamment comme relation de grandeur α₁<α<α₂. Sur la figure 4, la direction de la pale 28 de référence formant l'angle α est représentée en tirets à chaque fois, tandis que les directions des pales 28 réelles sont représentées en traits mixtes pour les deux pales présentant un angle α₁ et un angle α₂. La différence entre l'angle réel (α₁ et α₂) et l'angle de référence α forme un angle de variation noté respectivement β₁ et β₂.

Comme cela est illustré sur la figure 5, la variation de la direction des pales 28 génère une variation de la distance L entre les pales 28, et donc de la section de passage. Sur la figure 5 sont présentés trois paires de secteurs ayant la pale du haut présentant toujours la même direction du bord de fuite, en l'occurrence une direction formant l'angle de référence α avec la surface d'appui axial 262 de la butée axiale 260 de la plateforme extérieure 26, et la pale du bas présentant une direction formant en premier l'angle α₁, puis le même angle de référence α puis l'angle α₂. Ceci a pour conséquence d'obtenir trois longueurs L, L₁ et L₂ différentes entres les pales des trois paires, et ainsi trois sections de passage différent.

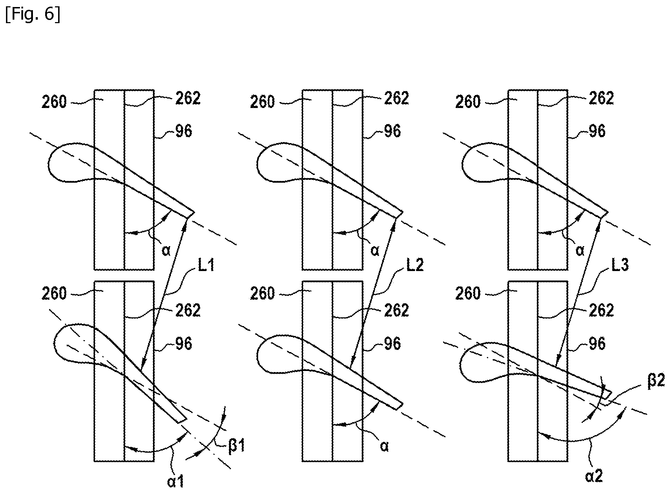

Pour rattraper ces éventuelles variations et ajuster l'orientation des secteurs 20 et donc des pales 28, la surface d'appui axial 262 des butées axiales 260 des plateformes extérieures 26 est usinée avec un angle correspondant audit angle de variation β₁ ou β₂ par exemple, comme cela est illustré sur la figure 6 qui présente trois butées axiale 260 différentes selon une vue du dessus.

En outre, la virole interne de support 5 comprend des orifices configurés pour recevoir les mâts 6. Le mât 6 permet de fournir un moyen de fixation du secteur 20 de distributeur en CMC par le haut, c'est-à-dire au carter, tout en minimisant le moment de flexion, dans la mesure où la longueur de flexion est diminuée de moitié environ de par le mât 6 traversant le secteur de distributeur. Chaque secteur 20 de distributeur est ainsi maintenu de façon déterministe, c'est-à-dire de manière à éviter que le secteur de distributeur 20 se mette à vibrer et en maîtrisant sa position, et cela tout en permettant au secteur de distributeur 20 de se déformer sous les effets de la température et de la pression entre autre indépendamment des pièces métalliques en interface.

Dans le cas où chaque secteur de distributeur comprenait plusieurs pales, la turbine comprendrait, au plus, un nombre de mâts correspondant pour chaque secteur de distributeur.

La turbine de turbomachine selon l'invention comprend un distributeur de turbine au moins en partie en CMC dont le montage est simplifié et adapté pour maintenir ses secteurs de distributeur de façon déterministe tout en permettant aux secteurs de se déformer indépendamment des pièces métalliques en interface, et en améliorant l'étanchéité entre le mât et la virole métallique externe.

## Revendications

1. Procédé de réalisation d'une turbine (1) de turbomachine, la turbine (1) de turbomachine comprenant un carter, une virole externe de support (9) en métal solidaire du carter et définissant une direction axiale (D_{A}) et une direction radiale (D_{R}), une virole interne de support (5) en métal, un distributeur (2) annulaire de turbine comportant une pluralité de secteurs (20) de distributeur en matériau composite à matrice céramique formant une couronne s'étendant entre la virole externe de support (9) et la virole interne de support (5),
chaque secteur (20) comportant une plateforme intérieure (24), une plateforme extérieure (26) et au moins une pale (28) s'étendant radialement entre les plateformes intérieure et extérieure (24, 26) et présentant un profil creux définissant un logement interne (280) s'étendant radialement,
et la turbine (1) comprenant en outre, pour chaque secteur (20), au moins un mât (6) solidaire de la virole métallique externe de support (9) et traversant radialement le secteur (20) via le logement (280) d'une pale (28),
pour chaque secteur (20), la plateforme extérieure (26) comprenant une surface radialement externe (26e) en regard de la virole métallique externe (9) et une butée axiale (260) s'étendant en saillie radiale depuis la surface radialement externe (26e) de la plateforme extérieure (26), et la virole métallique externe (9) comprend une surface radialement interne (91) en regard de la plateforme extérieure (26) et une butée axiale complémentaire (96) s'étendant en saillie radiale depuis la surface radialement interne (91) de la virole métallique externe (9), la butée axiale (260) étant en appui selon la direction axiale (D_{A}) contre la butée axiale complémentaire (96) et située en amont de la butée axiale complémentaire (96) par rapport au sens du flux d'air (F) destiné à s'écouler au travers de la turbine (1), et une surface (262) de la buté axiale (260) en contact avec la butée axiale complémentaire (96) présentant un angle d'usinage par rapport à un plan orthogonal à la direction axiale (D_{A}), l'angle d'usinage étant sélectionné pour ajuster l'orientation de ladite au moins une aube du secteur par rapport à la direction axiale (D_{A}) le procédé étant **caractérisé en ce que**,
le distributeur (2) est formé en matériau composite à matrice céramique dans une première étape, puis l'orientation de son profil d'aube est contrôlé dans une deuxième étape, puis l'angle d'usinage de la surface (262) de la buté axiale (260) en contact avec la butée axiale complémentaire (96) est déterminé pour ajuster l'orientation de ladite au moins une aube par rapport à la virole métallique externe (9) dans une troisième étape, la surface (262) de la buté axiale (260) en contact avec la butée axiale complémentaire (96) est usinée dans une quatrième étape, et le distributeur est assemblé aux viroles et au carter de la turbine dans une cinquième étape.

2. Procédé selon la revendication 1, dans laquelle les mâts (6) et la virole métallique externe (9) sont réalisés en une seule pièce.

3. Procédé selon l'une des revendications 1 ou 2, dans laquelle la virole métallique externe (9) comprend, selon la direction axiale (D_{A}), une extrémité amont et une extrémité aval, la butée axiale complémentaire (96) étant située sur l'extrémité aval.

4. Procédé selon l'une quelconque des revendications 1 à 3, dans laquelle le mât (6) est creux.

## Patentansprüche

1. Verfahren zur Herstellung einer Turbomaschinenturbine (1), wobei die Turbomaschinenturbine (1) ein Gehäuse, einen äußeren Stützmantel (9) aus Metall, der fest mit dem Gehäuse verbunden ist und eine axiale Richtung (D_{A}) und eine radiale Richtung (D_{R}) definiert, einen inneren Stützmantel (5) aus Metall und einen ringförmigen Turbinenleitkranz (2) umfasst, der mehrere Leitkranzsektoren (20) aus Verbundmaterial mit Keramikmatrix beinhaltet, die einen Kranz bilden, der sich zwischen dem äußeren Stützmantel (9) und dem inneren Stützmantel (5) erstreckt, wobei jeder Sektor (20) eine innere Plattform (24), eine äußere Plattform (26) und mindestens eine Schaufel (28) umfasst, die sich radial zwischen der inneren und der äußeren Plattform (24, 26) erstreckt und ein hohles Profil aufweist, das eine innere Aufnahme (280) definiert, die sich radial erstreckt, und die Turbine (1) ferner, für jeden Sektor (20), mindestens eine Strebe (6) umfasst, die fest mit dem äußeren metallischen Stützmantel (9) verbunden ist und den Sektor (20) über die Aufnahme (280) einer Schaufel (28) radial durchquert, wobei, für jeden Sektor (20), die äußere Plattform (26) eine radial äußere Oberfläche (26e), die dem äußeren metallischen Mantel (9) gegenüberliegt, und einen axialen Anschlag (260) umfasst, der sich von der radial äußeren Oberfläche (26e) der äußeren Plattform (26) radial hervorstehend erstreckt, und der äußere metallische Mantel (9) eine radial innere Oberfläche (91), die der äußeren Plattform (26) gegenüberliegt, und einen ergänzenden axialen Anschlag (96) umfasst, der sich von der radial inneren Oberfläche (91) des äußeren metallischen Mantels (9) radial hervorstehend erstreckt, wobei der axiale Anschlag (260) sich entlang der axialen Richtung (D_{A}) gegen den ergänzenden axialen Anschlag (96) stützt und sich in Bezug auf die Richtung der Luftströmung (F), die dazu bestimmt ist, durch die Turbine (1) zu strömen, stromaufwärts des ergänzenden axialen Anschlags (96) befindet, und eine Oberfläche (262) des axialen Anschlags (260), die mit dem ergänzenden axialen Anschlag (96) in Kontakt steht, einen Bearbeitungswinkel in Bezug auf eine Ebene orthogonal zur axialen Richtung (D_{A}) aufweist, wobei der Bearbeitungswinkel ausgewählt wird, um die Ausrichtung der mindestens einen Schaufel des Sektors in Bezug auf die axiale Richtung (D_{A}) einzustellen,
wobei das Verfahren **dadurch gekennzeichnet ist, dass** der Leitkranz (2) in einem ersten Schritt aus Verbundmaterial mit Keramikmatrix gebildet wird, dann die Ausrichtung seines Schaufelprofils in einem zweiten Schritt gesteuert wird, dann der Bearbeitungswinkel der Oberfläche (262) des axialen Anschlags (260), die mit dem ergänzenden axialen Anschlag (96) in Kontakt steht, bestimmt wird, um die Ausrichtung der mindestens einen Schaufel in Bezug auf den äußeren metallischen Mantel (9) in einem dritten Schritt einzustellen, die Oberfläche (262) des axialen Anschlags (260), die mit dem ergänzenden axialen Anschlag (96) in Kontakt steht, in einem vierten Schritt bearbeitet wird und der Leitkranz mit den Manteln und mit dem Gehäuse der Turbine in einem fünften Schritt zusammengebaut wird.

2. Verfahren nach Anspruch 1, wobei die Streben (6) und der äußere metallische Mantel (9) einteilig hergestellt werden.

3. Verfahren nach einem der Ansprüche 1 oder 2, wobei der äußere metallische Mantel (9) entlang der axialen Richtung (D_{A}) ein stromaufwärtiges Ende und ein stromabwärtiges Ende umfasst, wobei der ergänzende axiale Anschlag (96) sich am stromabwärtigen Ende befindet.

4. Verfahren nach einem der Ansprüche 1 bis 3, wobei die Strebe (6) hohl ist.

## Claims

1. A method for manufacturing a turbomachine turbine (1), the turbomachine turbine (1) comprises a casing, an outer support shroud (9) made of metal secured to the casing and defining an axial direction (D_{A}) and a radial direction (D_{R}), an inner support shroud (5) made of metal, an annular turbine nozzle (2) including a plurality of nozzle segments (20) made of ceramic matrix composite material forming a crown extending between the outer support shroud (9) and the inner support shroud (5),
each segment (20) including an inner platform (24), an outer platform (26) and at least one airfoil (28) extending radially between the inner and outer platforms (24, 26) and having a hollow profile defining an inner housing (280) extending radially,
and the turbine (1) further comprising, for each segment (20), at least one strut (6) secured to the outer metallic support shroud (9) and radially traversing the segment (20) via the housing (280) of an airfoil (28),
for each segment (20), the outer platform (26) comprising a radially outer surface (26e) facing the outer metallic shroud (9) and an axial stop (260) extending in radial protrusion from the radially outer surface (26e) of the outer platform (26), and the outer metallic shroud (9) comprises a radially inner surface (91) facing the outer platform (26) and a complementary axial stop (96) extending in radial protrusion from the radially inner surface (91) of the outer metallic shroud (9), the axial stop (260) bearing along the axial direction (D_{A}) against the complementary axial stop (96) and located upstream of the complementary axial stop (96) with respect to the direction of the stream (F) of air intended to flow through the turbine (1), and a surface (262) of the axial stop (260) in contact with the complementary axial stop (96) having an angle of machining with respect to a plane orthogonal to the axial direction (D_{A}), the angle of machining being chosen to adjust the orientation of said at least one blade of the segment with respect to the axial direction (D_{A}),
the method being **characterized in that** the nozzle (2) is formed of a ceramic matrix composite material in a first step, then the orientation of its blade profile is controlled in a second step, then the angle of machining of the surface (262) of the axial stop (260) in contact with the complementary axial stop (96) is determined to adjust the orientation of said at least one blade with respect to the outer metallic shroud (9) in a third step, the surface (262) of the axial stop (260) in contact with the complementary axial stop (96) is machined in a fourth step, and the nozzle is assembled on the shrouds and on the casing of the turbine in a fifth step.

2. The method as claimed in claim 1, wherein the struts (6) and the outer metallic shroud (9) may be made as a single part.

3. The method as claimed in one of claims 1 or 2, wherein the outer metallic shroud (9) comprises, along the axial direction (D_{A}), an upstream end and a downstream end, the complementary axial stop (96) being located on the downstream end.

4. The method as claimed in any of claims 1 to 3, wherein the strut (6) is hollow.
